# EUROPÄISCHE PATENTANMELDUNG

(11) **EP 1 190 864 A1**
(43) Veröffentlichungstag der Anmeldung: **27.03.2002**
(21) Anmeldenummer: 00120155.7
(22) Anmeldetag: 21.09.2000
(51) Int. Cl.: B41J 11/42

(54) **Verfahren und Vorrichtung zum Drucken von digitaler Bildinformation**

(71) Anmelder: GRETAG IMAGING Trading AG, 5430 Wettingen (CH)
(72) Erfinder: Waldner, Stephan, 8057 Zürich (CH); Kündig, Armin, 8046 Zürich (CH); Keller, Guido, 8106 Adlikon (CH); Schrämmli, Fortunat, 5212 Hausen (CH)
(74) Vertreter: Schwabe - Sandmair - Marx

(57) **Zusammenfassung**

In einer Tintenstrahldruckvorrichtung ist ein für densitometrische bzw. farbmetrische Messaufgaben ausgelegter und mit hoher örtlicher Auflösung abtastender Remissionssensor (S) vorgesehen. der für diverse fotoelektrische Messaufgaben eingesetzt wird.

In einer ersten Anwendung werden mittels des Sensors die Begrenzungsränder des Bildträgers (M) erfasst und das Drucken der ausserhalb der Begrenzungsränder des Bildträgers liegenden Bildpunkte des digitalen Bilds unterdrückt. Auf diese Weise ist die Herstellung von randlosen Bildern ohne Vergeudung von Drucktinten möglich.

In einer zweiten Anwendung wird der Sensor (S) zur fotoelektrischen Abtastung bzw. Ausmessung von mitgedruckten Druckkopf-Testmustern verwendet. Durch Analyse der dabei erzeugten Messwerte mittels geeigneter Algorithmen können der Funktionszustand des bzw. der Druckköpfe (H) der Druckvorrichtung festgestellt und entsprechende Massnahmen eingeleitet werden. Auf diese Weise kann die Produktion von Ausschuss zuverlässig verhindert werden.

In einer weiteren Anwendung wird der Sensor (S) auch zur Ausmessung von mitgedruckten Farbtestmustern eingesetzt. Durch Analyse der dabei ermittelten Messwerte und Vergleich mit entsprechenden Referenzwerten lassen sich rechtzeitig Veränderungen der Farbwiedergabequalität messtechnisch erkennen und durch geeignete Massnahmen korrigieren.

## Beschreibung

Die Erfindung betrifft ein Verfahren und eine Vorrichtung zum bildelementweisen Drucken von digitaler Bildinformation auf einen flächigen Bildträger gemäss dem Oberbegriff des unabhängigen Anspruchs 1 bzw. des unabhängigen Anspruchs 13.

Die Herstellung von körperlichen Bildern von digitalen Vorlagen erfolgt in zunehmendem Masse im Druckverfahren, wobei in aller Regel Tintenstrahldrucker eingesetzt werden. Ein für solche Zwecke typischer Hochleistungstintenstrahldrucker ist z.B. in der EP-A 1 009 158 beschrieben.

In der fotografischen Industrie werden vielfach randlose Bilder gewünscht. Bei Verwendung von Tintenstrahldruckern ist dies aber mit einigen heute noch nicht ganz zufriedenstellend gelösten Problemen verbunden. Eine häufig angewandte Methode zur Herstellung von randlosen Bildern besteht darin, das zu druckende Bildformat etwas kleiner als das Bildträgerformat zu wählen, also Bilder mit unbedrucktem Rand zu produzieren, und dann die unbedruckten Ränder wegzuschneiden. Diese Methode erfordert relativ aufwendige Schneideoperationen und erzeugt zudem unerwünschten Bildträger-Abfall. Bei einer anderen gängigen Methode wird das zu druckende Bildformat etwas grösser als das Bildträgerformat gewählt. Dabei wird dann aber Drucktinte vergeudet, und ausserdem besteht Verschmutzungsgefahr durch die ausserhalb des Bildträgers applizierten Drucktinten bzw. ist die Entfernung der ausserhalb des Bildträgers applizierten Drucktinten relativ aufwendig.

Ein weiteres Problem bei Tintenstrahldruckern besteht in der Verstopfungsgefahr der einzelnen Düsen der Druckköpfe. Es ist zwar möglich, die Druckdüsen durch häufiges Spülen oder sonstiges Reinigen durchgängig und damit funktionsfähig zu halten, jedoch wird dabei relativ viel Drucktinte verbraucht. Ausserdem werden durch die häufige Reinigung die Druckköpfe frühzeitig abgenutzt und muss der Druckvorgang relativ häufig unterbrochen werden. Es ist auch schon bekannt, von Zeit zu Zeit spezielle Testmuster mitzudrucken, anhand welcher visuell oder durch fotoelektrische Abtastung und Analyse der Abtastsignale erkannt werden kann, ob und ggf. welche Druckdüsen ausgefallen sind. Eine visuelle Inspektion ist für Hochleistungsprinter wegen der Gefahr der Produktion grosser Mengen von Ausschuss ungeeignet. Die bekannten automatischen Systeme mit fotoelektrischer Abtastung sind nur für relativ grosse Druckpunkte (Tintentröpfchen) und eine relativ kleine Anzahl von Druckdüsen ausgelegt und damit für moderne Hochleistungsdrucker mit sehr hoher Auflösung und einer entsprechend grossen Anzahl von sehr feinen Druckdüsen nicht geeignet.

Hochleistungs-Tintenstrahldrucker besitzen eine Mehrzahl von Druckköpfen, welche in aufwendiger Weise exakt gegenseitig ausgerichtet sein und werden müssen, da es bei Fehljustierung zu sichtbaren Störungen im Druckbild kommt. Ebenso werden sichtbare Störungen durch Fehllagen von Druckpunkten aus einzelnen Druckdüsen und durch unterschiedliche Grössen der Druckpunkte aus einzelnen Druckdüsen verursacht. Letztere können zwar durch Drucken in mehreren Durchgängen in gewissen Grenzen ausgemittelt (korrigiert bzw. kompensiert) werden, jedoch reduziert sich dadurch die Druckgeschwindigkeit erheblich.

Ein weiteres Problem bei Tintenstrahldruckern besteht in der korrekten Farbwiedergabe, welche durch Veränderungen des Bildträgermaterials, der Drucktinten, der Druckkopfcharakteristiken und durch Umgebungseinflüsse wie Temperatur und Luftfeuchtigkeit Schwankungen unterworfen ist. Durch Beschränkung der Anzahl eingesetzter Bildträgermaterialien (Druckmedien, Drucksubstrate) und sorgfältige Profilierung jeder Kombination von Druck-Modus und Bildträgermaterial kann zwar eine exakte Farbwiedergabe erreicht werden, diese wird aber durch einen Verlust an Flexibilität hinsichtlich der einsetzbaren Bildträgermaterialien und Drucktinten erkauft. Wenn ein neues Bildträgermaterial hinzukommt, muss für dieses erst aufwendig und unter Einsatz von speziell geschultem Fachpersonal ein neues Profil erstellt werden.

Durch die vorliegende Erfindung soll in erster Linie das Problem der Herstellung von randlosen Bildern auf einfache und ökonomische Art und Weise gelöst werden. Insbesondere soll es dabei weder zu Verschnitt von Bildträger noch zur Vergeudung von Drucktinten kommen. Ein weiteres Ziel der Erfindung besteht darin, mit der Lösung des Problems der Herstellung von randlosen Bildern gleichzeitig auch die Voraussetzungen zu schaffen, auch die anderen oben angesprochenen Schwierigkeiten bei Tintenstrahl- und vergleichbaren Druckern in den Griff zu bekommen.

Die Lösung dieser der Erfindung zugrundeliegenden Aufgaben ergibt sich durch das erfindungsgemässe Druckverfahren und die entsprechende erfindungsgemässe Druckvorrichtung gemäss den kennzeichnenden Merkmalen des unabhängigen Anspruchs 1 bzw. des unabhängigen Anspruchs 13. Besonders zweckmässige und vorteilhafte Ausgestaltungen sind Gegenstand der jeweils abhängigen Ansprüche.

Gemäss einem Hauptaspekt der vorliegenden Erfindung werden also mittels eines vorzugsweise fotoelektrischen Sensors die Begrenzungsränder des Bildträgers erfasst und das Drucken der ausserhalb der Begrenzungsränder des Bildträgers liegenden Bildpunkte des digitalen Bilds unterdrückt. Bei ausreichend genauer Erfassung der Begrenzungsränder kann auf diese Weise ohne Vergeudung von Drucktinten randlos gedruckt werden. Es versteht sich, dass das Format des zu druckenden Bilds dabei geringfügig grösser gewählt sein muss als das Format des Bildträgers.

Bei geeigneter Ausbildung des fotoelektrischen Sensors kann dieser gemäss einem weiteren Aspekt der Erfindung auch zur fotoelektrischen Abtastung bzw. Ausmessung von mitgedruckten Druckkopf-Testmustern verwendet werden. Durch Analyse der dabei erzeugten Messwerte mittels geeigneter Algorithmen können dann der Funktionszustand des bzw. der Druckköpfe der Druckvorrichtung festgestellt und entsprechende Massnahmen eingeleitet werden. Auf diese Weise kann die Produktion von Ausschuss zuverlässig verhindert werden.

Wenn der fotoelektrische Sensor für densitometrische bzw. farbmetrische Messaufgaben ausgelegt ist, kann er gemäss einem weiteren Aspekt der Erfindung auch zur Ausmessung von mitgedruckten Farbtestmustern eingesetzt werden. Auf diese Weise lassen sich rechtzeitig Veränderungen der Farbwiedergabequalität messtechnisch erkennen und durch geeignete Massnahmen korrigieren.

Der grundlegendste und. all gemeinste Gedanke der vorliegenden Erfindung besteht in der Verwendung eines einzigen, speziell ausgebildeten Multifunktionssensors, der für eine Reihe von ganz unterschiedlichen fotoelektrischen Messaufgaben einsetzbar ist. Mittels dieses speziellen Multi funktionssensors (und einer entsprechenden Steuerung bzw. Auswertungseinrichtung für die vom Sensor erzeugten Messwerte) können alle vorstehend beschriebenen Probleme bei Tintenstrahl- und vergleichbaren Druckern auf relativ einfache Weise gelöst werden. Die mit einem solchen Multifunktionssensor ausgestattete erfindungsgemässe Druckvorrichtung ist Gegenstand der Ansprüche 27-29.

Im folgenden wird die Erfindung anhand der Zeichnung näher erläutert. Es zeigen:
- Fig. 1: ein Prinzipschema eines Ausführungsbeispiels der erfindungsgemässen Druckvorrichtung,
- Fig. 2: ein Ausführungsbeispiel eines in der erfindungsgemässen Druckvorrichtung vorgesehenen fotoelektrischen Multifunktionssensors,
- Fig. 2a: eine schematische Ansicht des Inspektionsbereichs des Sensors der Fig. 2,
- Fig. 3: eine schematische Darstellung des Positionsverlaufs der Begrenzungsränder eines Bildträgers,
- Fig. 4: eine Funktionsskizze zur Erläuterung der Erfassung von Begrenzungsrändern des Bildträgers,
- Fig. 5: eine schematische Darstellung einer Maske,
- Fig. 6: eine schematische Darstellung einer maskierten Bildinformation,
- Fig. 7-9: typisches Testmuster zur Kontrolle des Funktionszustands der Druckköpfe und der Farbwiedergabequalität und
- Fig. 10-12: zu den Figuren 7-9 gehörige typische Messwert-Diagramme.

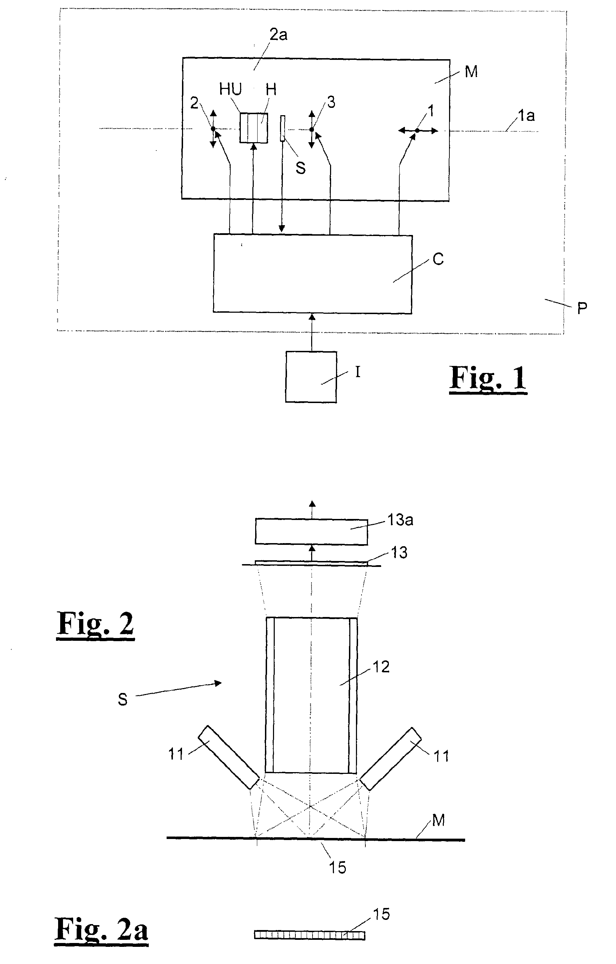

Die in Fig. 1 als Ganze mit P bezeichnete Druckvorrichtung umfasst in einem nicht dargestellten Gehäuse oder Rahmen eine Tintenstrahl-Druckeinheit HU, welche in der Regel aus mehreren Tintenstrahl-Druckköpfen H besteht, die von nicht gezeigten Reservoirs für Drucktinten unterschiedlicher Farben gespeist werden. Im Gehäuse sind ferner nur symbolisch durch einen Doppelpfeil angedeutete Positionierungsmittel 1 für einen zu bedruckenden, blatt- oder bahnförmigen Bildträger M (üblicherweise Papier geeigneter Qualität) vorgesehen. Die Positionierungsmittel 1 erlauben es, den Bildträger M in definierter Weise längs einer Bewegungsbahn 1a relativ zur Druckeinheit HU bzw. zu deren Druckköpfen H in der bzw. durch die Druckvorrichtung P zu bewegen, wobei eine Steuerung C die Bewegungsabläufe in an sich bekannter Weise kontrolliert. Ferner sind in der Druckvorrichtung P ebenfalls nur symbolisch durch einen Doppelpfeil angedeutete und von der Steuerung C kontrollierte Vorschubmittel 2 vorgesehen, mittels welcher die Druckkopfeinheit HU bzw. deren Druckköpfe H längs einer im wesentlichen quer zur Bewegungsbahn 1a des Bildträgers M verlaufenden Bewegungsbahn 2a verstellbar ist bzw. sind. Der Bildträger M und die Druckköpfe H sind somit in an sich bekannter Weise relativ zu einander in. zwei orthogonalen Richtungen beweglich, so dass jeder Druckkopf H an jedem beliebigen Punkt des Druckträgers M unter der Kontrolle der Steuerung C positioniert werden kann. Die Druckköpfe H der Druckkopfeinheit HU werden von der Steuerung C angesteuert und drucken die der Steuerung C von einem externen Rechner oder dgl. zugeführte digitale Bildinformation I in an sich bekannter Weise bildelementweise (pixelweise) in Form von feinen Tintentröpfchen auf den Bildträger M.

In der praktischen Realisierung kann die Druckvorrichtung z.B. als Trommel-Recorder ausgebildet sein, wie er u.a. in der EP-A 1 009 158 in allen Einzelheiten beschrieben ist. Ein solcher Trommel-Recorder umfasst typischerweise eine rotierende Spanntrommel für das Aufzeichnungsmedium (den Bildträger) und eine bezüglich der Drehbewegung der Spanntrommel feststehende Druckeinheit, welche aus einem oder mehreren achsparallel verschiebbaren Druckköpfen besteht. Durch die Rotation der Spanntrommel einerseits und die Verschiebung der Druckköpfe parallel zur Spanntrommelachse anderseits wird die gesamte Fläche des auf der Spanntrommel befestigten Bildträgers überstrichen. Die Dreh- oder Umfangsrichtung der Spanntrommel entspricht in Fig. 1 der Bewegungsbahn 1a, die Richtung der Spanntrommelachse entspricht in Fig. 1 der Bewegungsbahn 2a.

Soweit entspricht die erfindungsgemässe Druckvorrichtung voll und ganz herkömmlichen Tintenstrahldruckvorrichtungen und bedarf deshalb für den Fachmann keiner näheren Erläuterung.

Gemäss dem wichtigsten Aspekt der vorliegenden Erfindung ist die Druckvorrichtung mit einem fotoelektrischen Multifunktionssensor S ausgestattet, welcher mittels nur symbolisch durch einen Doppelpfeil angedeuteter und ebenfalls von der Steuerung C kontrollierter Antriebsmittel 3 parallel zu den Druckköpfen H über die gesamte Breite des Bildträgers M hin- und her bewegt werden kann. Alternativ kann der Sensor S auch mechanisch mit der Druckkopfeinheit HU verbunden und mit dieser mitbeweglich angeordnet sein. Der Sensor S tastet den unter ihm liegenden Bildträger M fotoelektrisch ab, wobei die vom Sensor S erzeugten Abtastsignale in noch zu beschreibender Weise von der Steuerung C aufbereitet und fiir das erfindungsgemässe Verfahren ausgewertet werden.

Der prinzipielle Aufbau des fotoelektrischen Sensors S geht aus Fig. 2 hervor. Er ist als örtlich hochauflösender farbtauglicher Remissionssensor ausgebildet und umfasst im wesentlichen eine Lichtquelle in Form von mehreren Leuchtdioden 11, eine Auffangoptik 12 und einen fotoelektrischen Wandler 13, der seinerseits aus einem linearen oder zweidimensionalen Feld von fotoelektrischen Wandlerelementen besteht. Die Lichtquelle bzw. die Leuchtdioden 11 beaufschlagen den unter dem Sensor S befindlichen. Bildträger M im wesentlichen unter 45° mit Messlicht. Das von der Oberfläche des Bildträgers M remittierte Messlicht wird von der Auffangoptik 12 im wesentlichen unter 90° aufgefangen und auf den fotoelektrischen Wandler 13 geleitet, welcher es in entsprechende elektrische Signale umwandelt.

Zur Kontrastverbesserung strahlen die Leuchtdioden 11 vorzugsweise in den zu den Farben der verwendeten Drucktinten komplementären Farben, typischerweise also rot, blau und grün. Anstelle der farbigen Leuchtdioden können auch Weisslichtquellen in Kombination mit passenden Farbfiltern vorgesehen sein.

Die Auffangoptik 12 ist vorzugsweise durch ein Feld von Gradienten-Index-Glasfasern gebildet, kann aber auch durch ein berkömmliches Objektiv realisiert sein.

Der fotoelektrische Wandler 13 ist vorzugsweise in CCD oder CMOS Technologie realisiert und besitzt eine relativ hohe lineare Auflösung von z.B. 10 µ. Die Länge des Wandlers kann z.B. 20 - 30 mm betragen, was dann einer Anzahl von 2000 - 3000 Wandlerelementen (Pixeln) pro Zeile entspricht. Der Wandler 13 kann eine oder mehrere Zeilen von Wandlerelementen enthalten und ist über eine Treiber-Elektronik 13a an die Steuerung C angeschlossen. Die von den einzelnen Wandlerelementen erzeugten, dem empfangenen Messlicht entsprechenden elektrischen Signale werden in an sich bekannter Weise über die Treiber-Elektronik 13a der Steuerung C zur Auswertung zugeführt.

Pixelweise arbeitende farbtaugliche fotoelektrische Abtastvorrichtungen (Sensoren) mit fotoelektrischen Wandlerelementfeldern (CCD-Arrays und dgl.) sowie die dafür erforderlichen Treiber-Elektroniken und Signalprozessoren sind an sich in der Farbmesstechnik oder von Digitalkameras her bekannt und benötigen deshalb für den Fachmann keiner näheren Erläuterung.

Die Auffangoptik 12 und der Wandler 13 können beispielsweise auch durch eine analoge oder digitale Kamera realisiert sein, welche die Treiber- und Signalverarbeitungselektronik 13a für die fotoelektrischen Wandlerelemente bereits enthält.

Der Sensor S tastet den Bildträger jeweils in einem schmalen rechteckigen Inspektionsbereich mit hoher örtlicher Auflösung pixelweise fotoelektrisch ab, wobei durch die Verwendung von farbigem Messlicht auch densitometrische Farbmessungen möglich sind. In Fig. 2a ist ein solcher Inspektionsbereich dargestellt und mit 15 bezeichnet. Die Länge eines typischen Inspektionsbereichs beträgt etwa 20-30 mm, die Breite etwa 10 µ - einige mm. Die lineare örtliche Auflösung in Längsrichtung beträgt typisch etwa 10 µ. Selbstverständlich können die Abmessungen des Inspektionsbereichs ohne den Rahmen der vorliegenden Erfindung zu verlassen auch anders gewählt werden.

Im Normalfall ist der Sensor S so orientiert, dass die Längserstreckung des Inspektionsbereichs 15 parallel zur Bewegungsbahn der Druckköpfe H bzw, des Sensors S selbst liegt. Der Sensor S kann aber auch so angeordnet sein, dass die Längsseite des Inspektionsbereichs 15 um einen Winkel von vorzugsweise 45° gedreht zur Bewegungsbahn der Druckköpfe H verläuft.

Der Sensor S kann aufgrund seiner speziellen Ausbildung gemäss der Erfindung für alle erforderlichen messtechnischen Aufgaben eingesetzt werden, um die eingangs erwähnten Probleme beim Drucken mit Tintenstrahldruckern zu lösen.

Gemäss einem ersten Aspekt der Erfindung wird der Sensor dafür herangezogen, den exakten örtlichen Verlauf der Begrenzungsränder des Bildträgers M zu erfassen. Die dabei gewonnene Ortsinformation über die Begrenzungsränder wird zur Ausblendung der ausserhalb der Begrenzungsränder liegenden Bildelemente (Bildpunkte) der zu druckenden digitalen Bildinformation I ausgewertet, so dass also ausserhalb der Begrenzungsränder liegende Bildelemente nicht gedruckt werden. Nachstehend wird dies näher erläutert, wobei der Einfachheit halber davon ausgegangen wird, dass mit einem in Form von Bandmaterial vorliegenden Bildträger M gearbeitet wird, so dass im allgemeinen nur die beiden gegenüberliegenden Seitenränder des Bildträgers erfasst werden müssen. Der Fall blattförmiger Bildträger bzw. die Erfassung von quer zur Bewegungsrichtung des Bildträgers M verlaufenden Begrenzungsrändern desselben wird weiter unten abgehandelt.

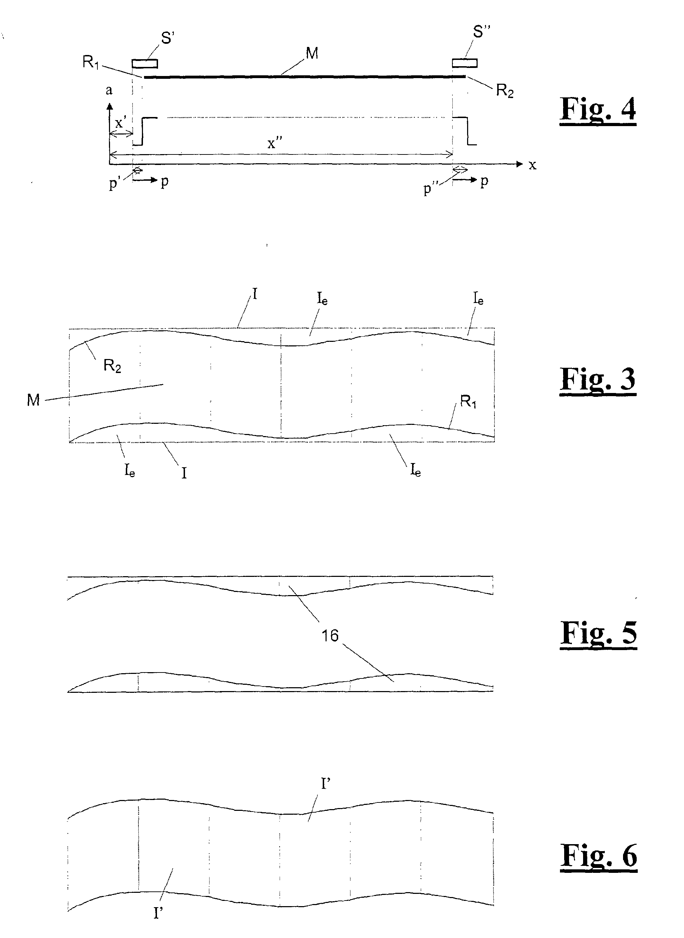

Wie in Figur 3 stark überzeichnet dargestellt ist, kann die Lage der seitlichen Begrenzungsränder R₁ und R₂ des Bildträgers M relativ zu einem ortsfesten Koordinatensystem in der Druckvorrichtung z.B. aufgrund von in der Praxis schwer vermeidbaren Ungenauigkeiten der Positionierungsmittel 1 und ev. auch aufgrund von Breitenschwankungen des Bildträgers selbst innerhalb gewisser Grenzen variieren. Da die Bewegung der Druckköpfe und damit die Lage des gedruckten Bilds ebenfalls auf dieses ortsfeste Koordinatensystem bezogen ist, führt dies dazu, dass mehr oder weniger grosse randnahe Bereiche der durch Rechtecke angedeuteten zu druckenden Bildinfomationen bzw. Bilder I ausserhalb des Bildträgers M zu liegen kommen. In der Figur 3 sind diese ausserhalb der Begrenzungsränder des Bildträgers M liegenden Bildbereiche mit Iₑ bezeichnet. Um diese Bildbereiche I_{c} bzw. die sie bildenden Bildelemente erfindungsgemäss ausblenden zu können, d.h. den Druck dieser Bildelemente unterdrücken zu können, muss die örtliche Lage der beiden seitlichen Begrenzungsränder R₁ und R₂ des Bildträgers in jedem Punkt der Längserstreckung des Bildträgers bekannt sein.

In Figur 4 ist schematisch dargestellt, wie die Erfassung der Lagen der seitlichen Begrenzungsränder des Bildträgers M mittels des Sensors S prinzipiell abläuft. Mit x ist eine parallel zur Bewegungsrichtung 2a des Sensors verlaufende Koordinatenachse des schon erwähnten ortsfesten Koordinatensystems bezeichnet, die Achse a bezeichnet den Pegel bzw. die Signalstärke der von den einzelnen Wandlerelementen des Sensors S erzeugten, der Intensität des sie beaufschlagenden Messlichts entsprechenden elektrischen Signale. Die beiden Koordinatenachsen p bezeichnen die relativen Lagen (Pixelkoordinaten) der einzelnen Wandlerelemente des Sensors auf diesem.

Der Sensor wird von der Steuerung C quer über die Breite des Bildträgers M in zwei in Fig. 4 mit S' bzw. S" bezeichnete Stellungen mit den Ortskoordinaten x' und x" gefahren, in welchen er bzw. der von ihm erfasste Inspektionsbereich sich über den Begrenzungsrändern R₁ bzw. R₂ des Bildträgers M befindet. In diesen Stellungen liefern die Messlicht aus innerhalb des Begrenzungsrands liegenden Bereichen des Bildträgers M empfangenden Wandlerelemente einen hohen Signalpegel, während die übrigen Wandlerelemente kein Messlicht empfangen und deshalb einen niedrigen Signalpegel erzeugen. Die in die Pegelwechsel fallenden Wandlerelemente werden durch die Steuerung C durch geeignete Auswertung der Messignale ermittelt und ihre relativen Lagen p' und p" (Pixelkoordinaten) auf dem Sensor bestimmt. Die Pixelkoordinaten p' und p" ergeben zusammen mit den Ortskoordinaten x' und x" des Sensors die exakten Positionen der beiden Begrenzungsränder R₁ und R₂ des Bildträgers M. Nun wird der Bildträger M um ein Weginkrement in Richtung der Bewegungsbahn 1a vorgeschoben und der gesamte Ablauf wiederholt und so weiter, bis der örtliche Verlauf der beiden Begrenzungsränder über die gesamte Länge des Bildträgers M erfasst ist.

Eine alternative Vorgehensweise besteht darin, zuerst den gesamten örtlichen Verläuf nur des einen Begrenzungsrands R₁ und anschliessend denjenigen des anderen Begrenzungsrands R₂ zu erfassen. Diese Vorgehensweise bietet sich insbesondere bei Ausbildung der Druckvorrichtung P als Trommel-Recorder gemäss der EP-A- 1 009 158 an. Hierbei wird der Sensor S zuerst über dem einen Begrenzungsrand des auf die Spanntrommel aufgespannten Bildträgers positioniert und die Spanntrommel einmal um 360° gedreht. Anschliessend wird der Sensor über den anderen Begrenzungsrand positioniert und die Spanntrommel wiederum um 360° gedreht. Bei jeder Ümdrehung der Spanntrommel werden die örtlichen Lagen je eines der beiden seitlichen Begrenzungsränder längs des gesamten aufgespannten Bildträgers ermittelt und gespeichert.

Anhand der gespeicherten örtlichen Verläufe der Begrenzungsränder des Bildträgers M wird in der Steuerung C eine Maske berechnet und der zu druckenden Bildinformation I überlagert. Die Maske bezeichnet alle diejenigen Bildelemente Iₑ der zu druckenden Bildinformation I, welche ausserhalb der zuvor erfassten Begrenzungsränder R₁ und R₂ des Bildträgers M liegen. Die Überlagerung der Maske mit der Bildinformation I erfolgt in dem Sinne, dass die digitalen Farbwerte der betroffenen Bildelemente I_{c} auf "transparent" gesetzt werden, so dass diese Bildelemente I_{c} nicht gedruckt werden. In Fig. 5 ist eine solche Maske schematisch dargestellt und mit 16 bezeichnet. Die Fig. 6 zeigt schematisch die nach der Überlagerung der Bildinformation I mit der Maske 16 verbleibende druckbare Bildinformation I'.

Die vorstehend beschriebenen Vorgehensweisen erfassen die Begrenzungsränder des Bildträgers M vor dem Drucken der Bildinfomation I. Dies setzt voraus, dass der Bildträger M in der Druckvorrichtung mit genügender Präzision reproduzierbar positioniert werden kann. Wenn dies aufgrund der Ausbildung der Druckvorrichtung nicht möglich ist, muss die Erfassung der Begrenzungsränder und die Berechnung und Überlagerung der Maske "on the fly" zeilenweise während des Druckvorgangs erfolgen. Hierzu wird für jede durch die Querbewegung der Druckköpfe H längs der Bewegungsbahn 2a und die Position des Bildträgers M längs der Bewegungsbahn 1a definierte Druckzeile zunächst die örtliche Lage des einen Begrenzungsrands des Bildträgers M erfasst und daraus eine Teilmaske ermittelt und der Bildinformation I (für diese Druckzeile) überlagert, so dass ausserhalb dieses Begrenzungsrands liegende Bildelemente (dieser Druckzeile) nicht gedruckt werden. Dann werden die Druckköpfe H zusammen mit dem Sensor S normal vorgeschoben und eine Zeile der Bildinformation gedruckt. Sobald der gegenüberliegende Begrenzungsrand des Bildträgers in den Inspektionsbereich des Sensors S gelangt, wird die örtliche Lage dieses gegenüberliegenden Begrenzungsrands erfasst und daraus eine zweite Teilmaske berechnet und der Bildinformation (dieser Druckzeile) überlagert, so dass auch die ausserhalb dieses Begrenzungsrands liegenden Bildelemente (dieser Druckzeile) nicht gedruckt werden. Anschliessend wird der Vorgang in umgekehrter Richtung wiederholt und so weiter, bis die gesamte Bildinformation gedruckt ist.

Wie schon erwähnt, können mit dem Sensor S auch quer zur Vorschubrichtung 1a des Bildträgers M verlaufende Begrenzungsränder erfasst werden. Bei der normalen Orientierung des Sensors S orthogonal zur Vorschubrichtung 1a ändern sich die Signalpegel praktisch sämtlicher Wandlerelemente des Sensors S beim Überfahren eines quer verlaufenden Begrenzungsrands gleichzeitig. Aus der zeitlichen oder räumlichen Information dieses Pegelwechsels kann die örtliche Lage des betreffenden Begrenzungsrands ermittelt und daraus (in Verbindung mit den Lageinformationen der beiden seitlichen Begrenzungsränder) die Maske berechnet werden. Analog zur Erfassung der beiden seitlichen Begrenzungsränder können die vor- und nachlaufenden Begrenzungsränder des Bildträgers auch "on the fly" während des Druckvorgangs erfasst werden, wenn aufgrund z.B. der mechanischen Gegebenheiten der Druckvorrichtung eine Erfassung vor dem Drucken nicht möglich ist. Wenn der Sensor S um einen bestimmtem Winkel, insbesondere 45°, zur Bewegungsbahn 2a der Druckköpfe H gedreht angeordnet ist, kann die Erfassung der vor-und nachlaufenden Begrenzungsränder ähnlich wie im Zusammenhang mit Fig. 4 beschrieben erfolgen.

Die Steuerung C kann selbstverständlich auch dazu eingerichtet sein, den Druckvorgang zu unterbrechen bzw. erst gar nicht zu starten und eine entsprechende Warnmeldung auszugeben, falls die erfassten Begrenzungsränder des Bildträgers ausserhalb eines voreingestellten Toleranzbereichs liegen.

Gemäss einem zweiten Aspekt der vorliegenden Erfindung wird der Sensor S auch zur Ausmessung von von Zeit zu Zeit (mit)gedruckten Testmustern herangezogen, anhand welcher der Funktionszustand und die gegenseitige Justierung der Druckköpfe H automatisch überprüft werden kann.

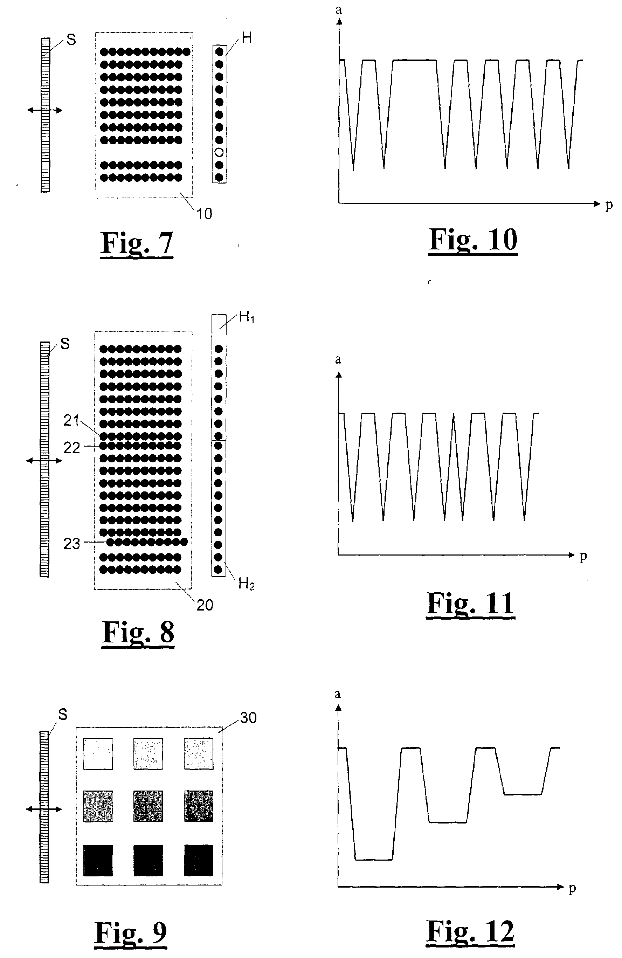

Die Figuren 7 und 10 erläutern schematisch die Vorgehensweise bei der Erkennung von z.B. aufgrund von Verstopfung ausgefallenen Düsen der Druckköpfe H. Es wird dazu ein Testmuster 10 gedruckt, welches durch ein- oder mehrmalige Aktivierung aller Düsen einer Farbe je eines Druckkopfs H während des Vorschubs des Bildträgers entsteht. Jede funktionierende Düse druckt dabei eine kurze Linie, fehlende Linien rühren von verstopfte Düsen her. Zur Vermeidung von Mehrdeutigkeiten bei der Abtastung ist wenigstens eine der Linien des Testmusters länger (oder kürzer) als die anderen. Das Testmuster 10 kann im Gegensatz zu den für die visuelle Inspektion verwendeten Testmustern sehr klein gehalten und deshalb zwischen den zu druckenden Bildern oder nahe am Bildträgerrand angeordnet werden.

Das Testmuster 10 wird mit dem Sensor S ein- oder mehrfach in Richtung quer zu den Linien des Testmusters abgetastet. Bei jeder Abtastung entsteht über die einzelnen Wandlerelemente (Pixelkoordinate p) des Sensors S ein typischer Signalverlauf, wie er in Fig. 10 ausschnittsweise dargestellt ist. Jede vorhandene Linie des Testmasters 10 erzeugt einen negativen Signal-Peak, bei einer wegen Ausfalls der Düse fehlenden Linie fehlt auch der entsprechende Signal-Peak. Die Steuerung C kann aus dem Signal-Verlauf durch Zählen der Peaks und Bestimmen der fehlenden Peaks erkennen, ob und ggf. welche Düsen des betreffenden Druckkopfs H ausgefallen sind. Wenn auf diese Weise der Ausfall einer oder mehrerer Druckdüsen erkannt wurde, wird anhand eines vorgegebenen Kriteriums automatisch entschieden, ob der Druckvorgang abgebrochen und eine Wartung (Reinigung, Ersatz) des Druckkopfs angefordert oder eingeleitet werden muss oder ob der Druckvorgang mit den verbleibenden funktionierenden Druckdüsen fortgesetzt werden kann. Wenn nämlich nicht allzu viele Druckdüsen ausgefallen sind, ist es in an sich bekannter Weise möglich, die Aufgaben der ausgefallenen Düsen auf die verbliebenen funktionierenden Düsen aufzuteilen. Diese Vorgehensweise ist allgemein als Software-Düsen-Ersatz bekannt. Die Reinigung der Druckköpfe H kann ggf. mit Hilfe von an sich bekannten Reinigungsmitteln und -methoden auch automatisch unter der Kontrolle der Steuerung C erfolgen.

Die Figuren 8 und 11 erläutern schematisch die Vorgehensweise bei der Überprüfung der gegenseitigen Justierung der Druckköpfe und bei der Erkennung von Fehllagen von Druckpunkten aus einzelnen Druckdüsen. Es wird ein Testmuster 20 gedruckt, das ähnlich aufgebaut ist wie das Testmuster 10, aber mit dem Unterschied, dass es mit mehr als einem Druckkopf H (im dargestellten Beispiel H₁ und H₂) gedruckt ist. Wie man erkennt, sind im Beispiel die beiden Druckköpfe H₁ und H₂ falsch justiert, da die beiden Linien 21 und 22 des Testmusters 20 zu nahe bei einander liegen. Ferner erzeugt eine der Düsen des Druckkopfs H₂ eine Fehllage der von ihr erzeugten Druckpunkte (Linie 23). Der bei der Abtastung des Testmusters 20 entstehende typische Signalverlauf über die Pixelkoordinate p ist in Fig. 11 (ausschnittsweise) dargestellt. Die Steuerung C analysiert wiederum diese Signalverläufe. Dabei werden nicht nur die Anzahlen der vorhandenen Linien ermittelt, sondern auch ihre relativen Positionen (Pixelkoordinate). Die Positionen der einzelnen Linien werden mit Soll-Positionen verglichen. Bei Abweichungen wird automatisch entschieden, ob eine Korrekturmassnahme erforderlich ist oder nicht. Die Korrekturmassnahme kann einerseits in einer mechanischen Nachjustierung der Druckköpfe H oder in der Anwendung einer Software-Korrektur bestehen, welche die Fehljustierung der Druckköpfe und die auch die Fehllagen der von den Düsen erzeugten Druckpunkte kompensieren kann. Die mechanische Nachjustierung der Druckköpfe H kann ggf. auch automatisch durch die Steuerung C mit Hilfe von Justiermitteln erfolgen. Die Justiermittel können z.B. durch motorisch getriebene Stellschrauben oder andere Aktuatoren für die Verstellung der Druckköpfe realisiert sein.

Gemäss einem weiteren Aspekt der vorliegenden Erfindung wird der Sensor S auch zur Ausmessung von Farbtestmustern herangezogen, anhand welcher die Farbwiedergabequalität der Druckvorrichtung überprüft und ggf. korrigiert werden kann. Die Figuren 9 und 12 zeigen schematisch die dafür erforderliche Vorgehensweise.

Es wird ein Farbtestmuster 30 gedruckt, welches aus einer Anzahl von (im dargestellten Beispiel neun) kleinen Farbtestfeldern unterschiedlicher Farben besteht. Typischerweise werden die Farben der eingesetzten Drucktinten (cyan, gelb, magenta, schwarz) und die additiven Primärfarben (rot, blau, grün) sowie schwarz und einige Grautöne verwendet. Die Farbmessfelder des Farbtestmusters werden mit dem Sensor S abgetastet, wobei jedes Farbmessfeld mit jeder Messlichtfarbe ausgemessen wird. Die Figur 12 zeigt einen typischen Signalverlauf über die Pixelkoordinate p fiir einen Abtastdurchgang (drei erfasste Farbmessfelder mit einer Messlichtfarbe). Die für die einzelnen Farbmessfelder bei jeder Messlichtfarbe ermittelten Intensitätswerte werden in der Steuerung C mit zuvor gespeicherten Referenzwerten verglichen und die Abweichungen bestimmt. Wenn die Abweichungen ausserhalb eines vorgegebenen Toleranzbereichs liegen, wird eine Korrekturmassnahme eingeleitet.

Eine geeignete Korrekturmassnahme kann z.B. darin bestehen, dass das Geräteprofil der Druckvorrichtung P (Printer Output Profile) angepasst bzw. neu erstellt wird und dann alle folgenden Druckvorgänge mit dem neuen Profil durchgeführt werden. Methoden und Vorrichtungen zur Erstellung von Geräteprofilen sind in der Literatur zum Color Management beschrieben und dem Fachmann bekannt.

Eine alternative Möglichkeit für eine automatische Korrekturmassnahme besteht in der Beeinflussung der Grösse der von den Düsen der Druckköpfe H erzeugten Tintentröpchen durch entsprechende Anpassung der an die Düsen angelegten Treiber-Spannungen. Durch Veränderung der Tröpfchengössen kann die Farbwiedergabecharakteristik der Druckvorrichtung in gewissen Grenzen automatisch geregelt werden.

Für dieses Vorgehen ist es erforderlich, dass das Farbtestmuster 30 Halbton-Farbtestfelder in den reinen Farben der eingesetzten Farbtinten enthält, also Farbtestfelder in den Farben der Drucktinten mit einer Flächendeckung jeweils kleiner 100%. Diese Halbton-Farbtestfelder werden in der beschriebenen Weise mittels des Sensors S ausgemessen und ihre Farbdichten bestimmt und mit Referenzwerten verglichen. Wenn die gemessene Farbdichte für eine Drucktinte ausserhalb eines vorgegebenen Toleranzbereichs liegt, wird mittels der Steuerung C die Tröpfchengrösse für diese Farbtinte je nach Abweichung erhöht oder reduziert. Auf diese Weise kann die Farbwiedergabequalität der Druckvorrichtung innerhalb gewisser Grenzen automatisch konstant gehalten werden.

## Patentansprüche

1. Verfahren zum bildelementweisen Drucken von digitaler Bildinformation auf einen flächigen Bildträger, wobei der Bildträger (M) in einer Druckvorrichtung (P) positioniert und mittels wenigstens eines relativ zum Bildträger beweglichen Druckkopfs (H) mit mindestens einem Farbmittel bildelementweise beaufschlagt wird, **dadurch gekennzeichnet, dass** mittels eines Sensors (S) die Lagen wenigstens zweier gegenüberliegender Begrenzungsränder (R₁,R₂) des in der Druckvorrichtung positionierten Bildträgers (M) erfasst werden, und dass ausserhalb der erfassten Begrenzungsränder des Bildträgers (M) liegende Bildelemente (I_{c}) der Bildinformation (I) nicht gedruckt werden.

2. Verfahren nach Anspruch 1, **dadurch gekennzeichnet, dass** der Bildträger (M) Blattmaterial ist und dass die Lagen aller vier Begrenzungsränder des Blattmaterials erfasst werden.

3. Verfahren nach Anspruch 1, **dadurch gekennzeichnet, dass** der Bildträger (M) Bandmaterial ist und dass nur die Lagen der beiden seitlichen Begrenzungsränder des Bandmaterials erfasst werden.

4. Verfahren nach einem der vorangehenden Ansprüche, **dadurch gekennzeichnet, dass** die Lagen der Begrenzungsränder des Bildträgers (M) vor dem Druckvorgang bestimmt werden.

5. Verfahren nach einem der vorangehenden Ansprüche, **dadurch gekennzeichnet, dass** die Lagen der Begrenzungsränder des Bildträgers (M) während des Druckvorgangs bestimmt werden.

6. Verfahren nach einem der vorangehenden Ansprüche, **dadurch gekennzeichnet, dass** zumindest zeitweise ein Druckkopf-Testmuster (10;20) gedruckt wird, dass dieses Druckkopf-Testmuster mittels des Sensors (S) ausgemessen wird, dass aus den dabei ermittelten Messwerten automatisch der Funktionszustand des mindestens einen Druckkopfs (H) bestimmt und mit einem Sollzustand verglichen wird, und dass bei Vorliegen einer Abweichung des Funktionszustands vom Sollzustand automatisch eine Korrekturmassnahme eingeleitet oder eine Statusmeldung erzeugt oder der Druckvorgang abgebrochen wird.

7. Verfahren nach Anspruch 6, **dadurch gekennzeichnet, dass** als Korrekturmassnahme eine automatische Reinigung des Druckkopfs (H) vorgenommen wird.

8. Verfahren nach Anspruch 6, **dadurch gekennzeichnet, dass** bei Ausfall einzelner Funktionselemente des Druckkopfs (H) deren Aufgaben auf die verbliebenen funktionstüchtigen Funktionselementen des Druckkopfs (H) übertragen werden, so dass mit den verbliebenen funktionstüchtigen Funktionselementen des Druckkopf die vollständige Bildinformation gedruckt wird.

9. Verfahren nach einem der vorangehenden Ansprüche, **dadurch gekennzeichnet, dass** zumindest zeitweise ein Farbtestmuster (30) gedruckt wird, dass dieses Farbtestmuster mittels des Sensors (S) ausgemessen wird, dass die dabei ermittelten Messwerte mit entsprechenden Referenzwerten verglichen werden, und dass bei Überschreitung einer vorgegebenen Abweichung der Messwerte von den Referenzwerten automatisch eine Korrekturmassnahme eingeleitet oder eine Statusmeldung erzeugt oder der Druckvorgang abgebrochen wird.

10. Verfahren nach Anspruch 9, **dadurch gekennzeichnet, dass** als Korrekturmassnahme eine Anpassung der Tröpfchengrösse der Farbmittel vorgenommen wird.

11. Verfahren nach Anspruch 9, **dadurch gekennzeichnet, dass** als Korrekturmassnahme eine Anpassung des Druckvorrichtungsprofils vorgenommen wird.

12. Verfahren nach einem der vorangehenden Ansprüche, **dadurch gekennzeichnet, dass** als Sensor (S) ein fotoelektrischer Remissionssensor verwendet wird, der eine mehrfarbige Lichtquelle (11) zur Beaufschlagung des Bildträgers (M) mit Messlicht, eine Auffangoptik (12) für das vom Bildträger remittierte Messlicht und einen fotoelektrischen Wandler (13) in Form eines linearen oder zweidimensionalen Felds von optoelektrischen Wandlerelementen umfasst.

13. Vorrichtung zum bildelementweisen Drucken von digitaler Bildinformation auf einen flächigen Bildträger, mit Positionierungsmitteln (1) für den Bildträger (M) und wenigstens einem relativ zum positionierten Bildträger beweglichen Druckkopf (H), der den Bildträger mit mindestens einem Farbmittel bildelementweise beaufschlagt, sowie mit einer Steuerung (C) für die Positionierungsmittel und den mindestens einen Druckkopf, **dadurch gekennzeichnet, dass** ein mit der Steuerung (C) zusammenarbeitender Sensor (S) zur Erfassung der Lagen wenigstens zweier gegenüberliegender Begrenzungsränder des positionierten Bildträgers (M) vorgesehen ist und dass die Steuerung (C) dazu ausgebildet ist, den Druck von ausserhalb der erfassten Begrenzungsränder des Bildträgers (M) liegenden Bildelementen der Bildinformation (I) zu unterdrücken.

14. Vorrichtung nach Anspruch 13, **dadurch gekennzeichnet, dass** die Steuerung (C) dazu ausgebildet ist, die Lagen der Begrenzungsränder des Bildträgers (M) vor dem Druckvorgang zu bestimmen.

15. Vorrichtung nach Anspruch 13, **dadurch gekennzeichnet, dass** die Steuerung (C) dazu ausgebildet ist, die Lagen der Begrenzungsränder des Bildträgers (M) während des Druckvorgangs zu bestimmen.

16. Vorrichtung nach einem der Ansprüche 13-15, **dadurch gekennzeichnet, dass** die Steuerung (C) dazu ausgebildet ist, zumindest zeitweise ein Drackkopf-Testmuster (10;20) zu drucken, dieses Druckkopf-Testmuster mittels des Sensors (S) auszumessen, aus den dabei ermittelten Messwerten automatisch den Funktionszustand des mindestens einen Druckkopfs (H) zu bestimmen und mit einem Sollzustand zu vergleichen, und bei Vorliegen einer Abweichung des Funktionszustands vom Sollzustand automatisch eine Korrekturmassnahme einzuleiten oder eine Statusmeldung zu erzeugen oder den Druckvorgang abzubrechen.

17. Vorrichtung nach Anspruch 16, **dadurch gekennzeichnet, dass** mit der Steuerung (C) zusammenwirkende Justiermittel zur Verstellung der gegenseitigen Lagen der Druckköpfe (H) vorgesehen sind und dass die Steuerung (C) dazu ausgebildet ist, zusammen mit den Justiermitteln als Korrekturmassnahme eine Justierung der gegenseitigen Lagen der Druckköpfe vorzunehmen.

18. Vorrichtung nach Anspruch 16 oder 17, **dadurch gekennzeichnet, dass** mit der Steuerung (C) zusammenwirkende Mittel zur automatischen Reinigung des Druckkopfs vorgesehen sind.

19. Vorrichtung nach Anspruch 16 oder 17, **dadurch gekennzeichnet, dass** die Steuerung (C) dazu ausgebildet ist, bei Ausfall einzelner Funktionselemente des Druckkopfs (H) deren Aufgaben auf die verbliebenen funktionstüchtigen Funktionselementen des Druckkopfs (H) zu übertragen, so dass mit den verbliebenen funktionstüchtigen Funktionselementen des Druckkopf die vollständige Bildinformation gedruckt werden kann.

20. Vorrichtung nach Anspruch 16 oder 17, **dadurch gekennzeichnet, dass** die Steuerung (C) dazu ausgebildet ist, Abweichungen in Grösse und Position der Bildelemente durch Beeinflussung der umliegenden Bildelemente zu kompensieren.

21. Vorrichtung nach einem der Ansprüche 13-20, **dadurch gekennzeichnet, dass** die Steuerung (C) dazu ausgebildet ist, zumindest zeitweise ein Farbtestmuster (30) zu drucken, dieses Farbtestmuster mittels des Sensors (S) auszumessen, die dabei ermittelten Messwerte mit entsprechenden Referenzwerten zu vergleichen und bei Überschreitung einer vorgegebenen Abweichung der Messwerte von den Referenzwerten automatisch eine Korrekturmassnahme einzuleiten oder eine Statusmeldung zu erzeugen oder den Druckvorgang abzubrechen.

22. Vorrichtung nach Anspruch 21, **dadurch gekennzeichnet, dass** die Steuerung (C) dazu ausgebildet ist, als Korrekturmassnahme eine Anpassung der Tröpfchengrösse der Farbmittel vorzunehmen.

23. Vorrichtung nach Anspruch 21, **dadurch gekennzeichnet, dass** die Steuerung (C) dazu ausgebildet ist, als Korrekturmassnahme eine Anpassung des Druckvorrichtungsprofils vorzunehmen.

24. Vorrichtung nach einem der Ansprüche 13-23, **dadurch gekennzeichnet, dass** der Sensor (S) als fotoelektrischer Remissionssensor ausgebildet ist, der eine mehrfarbige Lichtquelle (11) zur Beaufschlagung des Bildträgers (M) mit Messlicht, eine Auffangoptik (12) für das vom Bildträger remittierte Messlicht und einen fotoelektrischen Wandler (13) in Form eines linearen oder zweidimensionalen Felds von optoelektrischen Wandlerelementen umfasst.

25. Vorrichtung nach Anspruch 24, **dadurch gekennzeichnet, dass** die mehrfarbige Lichtquelle (11) durch in zu den verwendeten Farbmitteln komplementären Farben strahlende Leuchtdioden gebildet ist.

26. Vorrichtung zum bildelementweisen Drucken von digitaler Bildinformation auf einen flächigen Bildträger, mit Positionierungsmitteln (1) für den Bildträger (M) und wenigstens einem relativ zum positionierten Bildträger beweglichen Druckkopf (H), der den Bildträger mit mindestens einem Farbmittel bildelementweise beaufschlagt, sowie mit einer Steuerung (C) für die Positionierungsmittel und den mindestens einen Druckkopf, **dadurch gekennzeichnet, dass** ein mit der Steuerung (C) zusammenarbeitender farbtauglicher fotoelektrischer Sensor (S) vorgesehen ist, der so ausgebildet ist, dass er sowohl zur Erfassung der Lagen von Begrenzungsrändern des positionierten Bildträgers (M) als auch zur Ausmessung von Druckkopftestmustern und Farbtestmustern geeignet ist.

27. Vorrichtung nach Anspruch 26, **dadurch gekennzeichnet, dass** der Sensor (S) als fotoelektrischer Remissionssensor ausgebildet ist, der eine mehrfarbige Lichtquelle (11) zur Beaufschlagung des Bildträgers (M) mit Messlicht, eine Auffangoptik (12) für das vom Bildträger remittierte Messlicht und einen fotoelektrischen Wandler (13) in Form eines linearen oder zweidimensionalen Felds von optoelektrischen Wandlerelementen umfasst.

28. Vorrichtung nach Anspruch 26 oder 27, **dadurch gekennzeichnet, dass** der Sensor (S) mittels eigener Antriebsmittel (3) relativ zum positionierten Bildträger (M) beweglich ist.

29. Vorrichtung nach Anspruch 26 oder 27, **dadurch gekennzeichnet, dass** der Sensor (S) mechanisch mit dem mindestens einen Druckkopf (H) gekoppelt und mit diesem mitbeweglich ist.
